Europäisches Patentamt

European Patent Office

Office européen des brevets

(11) Veröffentlichungsnummer: **0 153 721**
**A1**

(12) **EUROPÄISCHE PATENTANMELDUNG**

(21) Anmeldenummer: 85102052.9

(22) Anmeldetag: 25.02.85

(51) Int. Cl.⁴: **G 01 F 23/02**

(30) Priorität: 28.02.84 AT 659/84

(43) Veröffentlichungstag der Anmeldung:
04.09.85 Patentblatt 85/36

(84) Benannte Vertragsstaaten:
AT BE CH DE FR GB IT LI LU NL SE

(71) Anmelder: Klinger AG
Baarerstrasse 10
CH-6301 Zug(CH)

(72) Erfinder: Wirz, Peter
Neudorf 832
CH-5726 Unterkulm(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) Flüssigkeitsstandanzeiger-Schauglas.

(57) Flüssigkeitsstandschauglas (4') aus Korund, das ausgezeichnete Eigenschaften hinsichtlich Druck-, Erosions- und Korrosionsfestigkeit besitzt.

Fig. 2

0153721

226/93-E

## Flüssigkeitsstandanzeiger-Schauglas

Die Erfindung betrifft ein Schauglas für einen Flüssigkeitsstandanzeiger und einen mit einem solchen Schauglas ausgerüsteten Flüssigkeitsstandanzeiger, wobei das Schauglas extremen Betriebsbedingungen hinsichtlich Druck, Erosion, Korrosion und selbstverständlich auch Temperatur ausgesetzt wird.

Bekanntlich müssen bestimmte industrielle Anlagen, insbeson-dere Dampfkessel, mit Flüssigkeitsstandanzeigern ausgerüstet werden, die eine visuelle Sicherheitsüberwachung ermöglichen. Wegen der vielfach extremen Betriebsbedingungen ist gewöhnliches Glas für diesen Zweck ungeeignet. Aus diesem Grunde wurden und werden Spezialgläser entwickelt, die mehr oder weniger gut an diese Bedingungen angepaßt sind (US-A-4,088,023; Katalog "Schaugläser" der Fa. Pieterman Hardglas, Zoetermeer/NL).

Trotz der erheblichen Fortschritte in der Glastechnik ist es jedoch noch nicht gelungen, ein Glasmaterial herzustellen, das gleichzeitig hinsichtlich der vielen auftretenden Beanspruchungen befriedigt. Insbesondere Widerstandsfähigkeit gegen Temperaturschocks und lange Lebensdauer bei korrosiven Medien sind problematisch.

Vielfach hat man sich daher damit zu behelfen versucht, daß man die Druckbelastung durch ein Stützglas auffängt, während der Flüssigkeit ein das Stützglas abdeckendes Glimmerblättchen zugekehrt ist. Aber auch diese Konstruktion befriedigt nicht und erfordert darüberhinaus besondere Sorgfalt bei der Montage, die wegen der kurzen Lebensdauer rrelativ häufig erforderlich ist.

Gemäß der Erfindung wird als Schauglas für Flüssigkeitsanzeiger Korund, insbesondere künstlicher Korund verwendet,
der vorzugsweise monokristallin ist, aber auch bei genügender
optischer Transparenz aus polykristallinem Material bestehen
kann.

Obwohl man schon sehr lange Korund in großindustriellem
Maßstab herstellt, ist die Fachwelt an der Möglichkeit, ihn
als Material für Schaugläser einzusetzen, vorbeigegangen. Dies
ist umso überraschender, als Korund Eigenschaften besitzt, die
ihn für diesen Zweck optimal erscheinen lassen: Sehr hohe Festigkeit und damit lange Lebensdauer trotz erodierender Einflüsse,
erhebliche Temperaturschockfestigkeit, gute Laugenbeständigkeit,
und sehr gute optische Qualitäten, insbesondere Transparenz
im sichtbaren Spektralbereich.

Man kann das Schauglas einstückig aus Korund fertigen,
man kann aber auch eine Korundschutzscheibe vor eine Stützscheibe
aus einem anderen druckfesten Glas setzen, ähnlich wie dies
oben für den Glimmer-Glas-Verbund erläutert wurde. Im übrigen
erfordert der Einsatz der erfindungsgemäßen Schaugläser keine
Änderungen an vorhandenen Konstruktionen von Flüssigkeitsstandanzeigern.

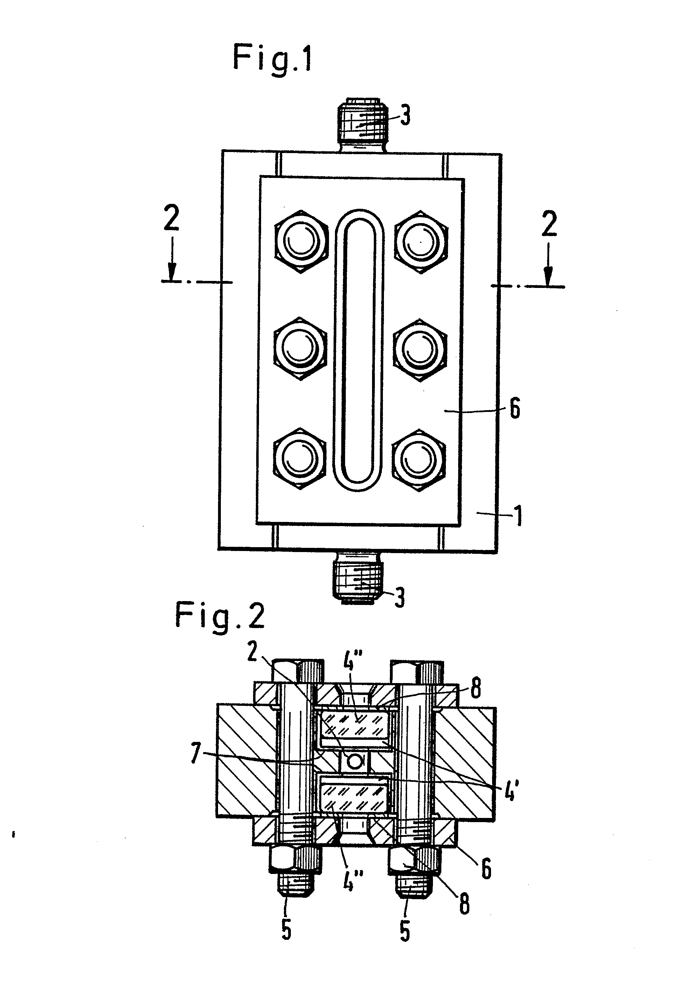

Ein Ausführungsbeispiel ist in der beigefügten Zeichnung
dargestellt; Fig. 1 zeigt eine Frontalansicht, während Fig. 2
einen Schnitt nach Linie 2-2 der Fig. 1 darstellt.

Der Flüssigkeitsstandanzeiger umfaßt einen Anzeigerkörper
1 mit einem Flüssigkeitskanal 2, der über oben und unten vorgesehene Stutzen 3 mit einem Behälter oder dergleichen verbunden
werden kann. Es sind zwei Schaugläser oder Fensterkörper 4 vorgesehen, die kongruent beidseits den Kanal 2 begrenzen und bei
Durchleuchtung von einer Seite auf der andern die Ablesung ermöglichen. Jeder Fensterkörper umfaßt eine Korundplatte 4', die
dem Kanal 2 zugekehrt ist, und einen Stützkörper 4" aus Glas,
der die Korundplatte auf ihrer dem Kanal abgewandten Seite ver-

0153721

stärkt, jedoch nicht mit der Flüssigkeit in diesem in Kontakt gelangen kann. Beide Fensterkorper werden mittels Zugschrauben 5, die auf mit einem Fensterschlitz versehene Deckplatten 6 wirken, unter Zwischenschaltung von Dichtungen 7 auf der Kanalseite und Beilagen 8 auf der dem Kanal abgewandten Seite gegen den Anzeigerkörper gepreßt. Es ist anzumerken, daß durch die Verwendung von künstlichem Korund für die Platten 4' die Gefahr, daß diese Platten bei der Erstmontage oder beim Austausch beschädigt werden, wegen der großen Härte des Materials sehr gering ist.

Patentansprüche

1) Schauglas für Flüssigkeitsstandanzeiger zum Einsatz unter extremen Druck-, Erosions- und Korrosionsbedingungen aus Korund.

2) Flüssigkeitsstandanzeiger, dessen Schauglas aus Korund besteht.

Fig.1

3

2 2

6

1

3

Fig.2

2 4" 8

7

4'

6

4" 8

5 5

# EUROPÄISCHER RECHERCHENBERICHT

Europäisches Patentamt

| | EINSCHLÄGIGE DOKUMENTE | | EP 85102052.9 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US - A - 4 088 023 (BERLEUE) <br><br> * Spalte 1, Zeile 34 - Spalte 2, Zeile 15; Spalte 3, Zeile 1 - Spalte 5, Zeile 68 * <br><br> -- | 1,2 | G 01 F 23/02 |
| A | CH - B5 - 632 891 (STETTLER) <br><br> * Seite 3, Zeilen 31-59 * <br><br> -- | 1,2 | |
| A | US - A - 3 977 251 (MEGINNIS) <br><br> * Spalte 1, Zeilen 9-46; Spalte 6, Zeilen 53-60. * <br><br> -- | 1,2 | |
| A | R. NIEDERLEUTHNER "Unbildsame Rohstoffe keramischer Massen", 1928, Julius Springer, Wien <br><br> * Seiten 147-151, 186-188 <br><br> ---- | 1,2 | |

| | RECHERCHIERTE SACHGEBIETE (Int. Cl.4) |
|---|---|
| | G 01 F 23/00 <br> G 01 D 11/00 <br> G 04 B 39/00 <br> C 30 B 29/20 |

Der vorliegende Recherchenbericht wurde für alle Patentansprüche erstellt.

| Recherchenort | Abschlußdatum der Recherche | Prüfer |
|---|---|---|
| WIEN | 21-05-1985 | GRONAU |